# EUROPEAN PATENT APPLICATION

(11) **EP 2 672 109 A1**
(43) Date of publication of application: **11.12.2013**
(21) Application number: 12170672.5
(22) Date of filing: 04.06.2012
(51) Int. Cl.: F03D 5/06

(54) **System and method for converting wind flow energy into mechanical, thermodynamic or electrical energy**

(71) Applicant: moct7.com GbR, 10623 Berlin (DE)
(72) Inventor: Baayen, Jorn Huibregt, 12157 Berlin (DE); Heinz, Ulrich Notger, 10827 Berlin (DE)
(74) Representative: Lunati, Valerio

(57) **Abstract**

The invention relates to a system for converting wind flow energy into mechanical, thermodynamic and/or electrical energy, comprising driving means (12, 22) for driving an energy buffer and/or an energy converter; a wind engaging member (11, 21) connected to the driving means (12, 22); and steering means (15) for steering the wind engaging member (11, 21) in such a way that it moves the driving means (12, 22) in a see-saw manner. The invention further relates to a method for converting wind flow energy into mechanical, thermodynamic and/or electrical energy, the method comprising repeatedly steering a wind engaging member (11, 21) in a direction substantially perpendicular to a wind direction, thereby effecting a driving means (12, 22), connected to the wind engaging member (11, 21), to move in a see-saw manner.

## Description

The invention pertains to a system and method for converting wind flow energy into mechanical, thermodynamic or electrical energy. More particularly, the invention pertains to an airborne system and method to harvest wind energy comprising a tethered wing or kite.

### Background of the Invention

In order to extract usable energy from air currents, various methods have been devised. The most prominent ones are windmills and wind turbines, usually comprising a tower with a rotor located on top. These concepts have in common that they typically require enormous material usage. Tons of concrete are needed for a sufficiently high tower and its foundation in order to enable the turbine to run efficiently.

Due to this high material usage, amongst others, a yet small segment of the wind-energy market follows the approach of using airborne structures to harvest wind energy and transfer it by various means to a ground station for further processing, transport or use. Three main concepts of using airborne structures have turned up, which can be characterized as pumping plants, carousel plants or closed circuit plants, and airborne turbines.

The idea behind pumping plants is to use a kite for force generation, which is affixed to a ground station via a load cable. The ground station typically accommodates a cable reel on which the load cable is wound up. In general, a pumping plant operates in two phases: A reel-out phase and a reel-in phase. During the reel-out phase, the kite - which flies an aerodynamically useful trajectory - is slowly reeled out while generating lift forces. These lift forces are transformed into electrical energy by a generator associated with the cable reel. At the highest point of elevation (typically in the order of 500-1000m), the reel-in phase begins, where the shape of the kite is changed so that it generates as little resistance as possible and the kite is reeled in by means of a ground-based motor, until it reaches the lowest elevation point (typically in the order of 100-200m). An illustrative example of a pumping plant is disclosed, e.g., in US 7,504,741.

Carousel plants, on the other hand, operate on a closed circular track. Several kites are mounted around the periphery of a moving frame resembling a carousel. The carousel rotates around a vertical axis, whose pivotal centre is geared with a generator. Since the carousel rotates horizontally and on a closed track, each kite traverses basically four phases during a full cycle: upwind, crosswind, downwind, and crosswind. During the upwind phase the kite is shaped such that it generates minimal drag, analog to the reel-in phase of a pumping plant. During the crosswind phase the kite is then fully unfolded so that it exerts maximum pulling forces to the carousel during the subsequent downwind phase. On completion of the downwind phase, which constitutes the analog to the reel-out phase of a pumping plant, the kite is reshaped again for the forthcoming upwind phase of the next cycle. An illustrative example of a carousel plant is disclosed, e.g., in EP 1 672 214.

Closed circuit plants operate in a similar manner, but are rather shaped like a pearl necklace than a carousel. In a closed circuit plant several platforms are strung together to form a large elongated loop, wherein each platform comprises a kite, respectively. The elongated loop extends horizontally on the ground and usually is aligned such that a maximum number of kites travels in crosswind direction. Due to their large size of several hundred meters in diameter, closed circuit plants usually are installed on fixed tracks and therefore are suited only for areas where the wind direction is substantially constant. An example of a closed circuit plant is disclosed, e.g., in EP 2 075 461.

An airborne turbine can best be characterized as the counterpart of a helicopter which comprises a plurality of rotors and which is affixed to the ground by means of a ground cable. In contrast to a helicopter, however, the rotors of an airborne turbine are not connected to a motor, but to a generator instead. In operation, the wind flow sets the rotors rotating. Either lift force obtained from the wind flow or buoyancy force (e.g., helium) keeps the plant in the air, while the ground cable prevents the plant from flying away and serves to discharge the generated electrical energy to the ground station.

The above described prior art concepts for extracting wind energy using kites have various disadvantages. The pumping concept, for example, relies on the reeling out of lines. As lines grow longer, their drag increases. Since the drag limits the efficiency of the plant, pumping plants have a reduced efficiency compared to other concepts. Furthermore, since the kite has to be reeled in again, a pumping plant has a significant portion of its operating time devoted to a phase where it does not produce any energy, but actually consumes energy for reeling in the kite. Moreover, since generators suitable for both operation phases - reel-out and reel-in - usually are not efficient, one has to provide both a generator for the reel-out phase and a separate motor for the reel-in phase. Both have to work on the same cable, thus requiring additional gearing and coupling. Also, after the reel-in phase, the kite needs to swing into its reel-out trajectory again. During this process the kite accelerates and produces less force on the cable than if it flew already at maximum velocity. Last but not least, constant reel-out and reel-in will put a certain strain on the load cable, thereby increasing deterioration and the likelihood of a system failure.

Concerning carousel-plants, the overall efficiency is reduced to some extent, since some of the kites always have to be dragged against the wind. Also the control algorithm for the kites, which has to be able to control kites on an arbitrary path and switch between different paths, is complex and therefore less robust and more prone to failure. Last but not least, due to the fact that a large number of kites are fixed to a single carousel which in turn drives a single generator, a failure of one kite would shut down the whole plant.

In addition to these drawbacks, closed circuit plants further require large track circuits in order to run economically. This limits the locations where such plants could be built and complicates the acquisition of necessary permits, particularly since larger patches of airspace will have to be shut off for aviation in order to avoid collision of aircraft with the kites.

Concerning airborne turbines, the airborne device has very high moving masses since it incorporates generators and actuators - which with the other concepts could be kept on the ground. As a consequence, a failure leading to a crash, e.g., a failing ground cable or actuator, can potentially cause great harm. Also, generators in the air produce a significant noise level, comparable to a turbo-prop engine of the same size. Moreover, a collision with the air-bound parts is much more dangerous for birds than a collision with the soft tissue of a kite. Last but not least, the ground cable has to be electrically conducting in order to discharge the electrical energy generated by the generators in the airborne turbine wing plant. A conducting cable turns the system into a lightning rod, rendering the system prone to lightning strikes. A lighting strike could cause serious harm to the flying structure and could even lead to a crash.

Therefore, there remains a need for a system and method for harvesting wind flow energy which overcomes or at least alleviates the above drawbacks of the prior art.

### Description of the Invention

According to the invention, there is provided a system for converting wind flow energy into mechanical, thermodynamic and/or electrical energy, comprising driving means for driving an energy buffer and/or an energy converter, a wind engaging member connected to the driving means, and steering means for steering the wind engaging member in such a way that it moves the driving means in a see-saw manner.

Further provided is a method for converting wind flow energy into mechanical, thermodynamic and/or electrical energy, the method comprising repeatedly steering a wind engaging member in a direction substantially perpendicular to a wind direction, thereby effecting a driving means, connected to the wind engaging member, to move in a see-saw manner.

The underlying principle of the invention is that air flows along the wind engaging member which makes the wind engaging member fly. Typically, the wind engaging member comprises one or more wings so that the lift forces are generated by air that flows over and under the wing(s), producing low pressure above the wing(s) and high pressure below it. This deflection may also generate horizontal drag along the direction of the wind. The resultant force vector from the lift and drag force components is opposed by the tension of connection means such as a load cable, which connects the wind engaging member to the driving means.

Due to the fact that, during normal operation of the system, the connection to the driving means is of a fixed length, the area in which the wind engaging member can fly has the shape of a sphere. Naturally, the presence of the Earth cuts away half of this sphere. In addition, the wind blows the wind engaging member into the direction of the airflow. The actual area in which the wind engaging member flies, the so-called wind window, can therefore be best circumscribed as half of a hemisphere or a "quarter-sphere". However, the skilled person will understand that this area is not of an ideal spherical shape, since the fixation point on the driving means is not absolutely stationary. That is, according to the invention the fixation point is able to move back and forth as the driving means is moved in the see-saw manner.

The lift forces exerted on the wind engaging member can be used to induce a forward movement thereof. Preferably, the wind engaging member is configured or steered such that it repeatedly criss-crosses the quarter-sphere it flies in. As a result, the wind engaging member effects a force component on the connection means (e.g., load cable) that is substantially perpendicular to the direction of the wind. This lateral force can be used to move the driving means in the see-saw manner.

The skilled person will appreciate that it is this movement of the driving means induced by forces substantially perpendicular to the wind direction that is used to convert the wind flow energy into other forms of energy. In other words, the repeated movement of the driving means in a direction substantially perpendicular to the wind direction is exploited.

The system of the present invention has several advantages over the prior art. Compared to pumping plants, the system does not require a periodically occurring reel-in phase. As a consequence, the system does neither involve a periodically occurring power-consuming phase nor does it involve phases of reduced efficiency where the kite has to re-accelerate. Indeed, in the system according to the invention the wind engaging member is able to fly in the sweet spot of power generation all the time. Moreover, since the connection means (e.g., load cable) - during normal operation - is kept at more or less the same length, wear and tear is reduced and drag is kept constant. Last but not least, there is no need for a separate motor and coupling for the reel-in phase.

Contrary to carousel-plants there is no coherent track infrastructure needed for operation and the failure of one part does not affect other units. Since no kites have to be pulled against the wind, the kite-unit can operate at maximum efficiency all the time. Also, shutting down one unit does not affect other units. Thus, repair works or controlling the overall output of an array of units is easy to accomplish and does not require a complete shut-down of the entire plant or difficult control strategies.

Compared to closed circuit plants with several platforms, the system of the invention requires rather small setup space per kite-unit. Moreover, the invention can be employed in locations where the wind direction frequently changes.

Compared to airborne turbines, the system of the invention has only small masses in the air, which results in higher efficiency, less noise, less risk in terms of a possible crash, less material usage for building the plant, and less danger for the fauna. Furthermore, the connection means (e.g., load cable) does not necessarily have to be conductive so that the danger of lightning strikes can be considerably reduced.

The driving means can be any suitable means where a force can be applied and which is able to move in an oscillating or see-saw manner. In this context the movement in an oscillating or see-saw manner shall be understood as a movement in a back-and-forth fashion, i.e., to comprise a repeated change of direction. Preferably, the driving means is capable of being moved substantially perpendicular to a wind direction and/or to repeatedly cross the wind direction in a right angle. For that purpose the movement of the driving means can be constrained to certain paths or areas, which extend substantially perpendicular to the wind direction and/or are axially symmetric to an axis of symmetry along the wind direction (wind axis). That is, the driving means can be configured to repeatedly move from one side of the axis of symmetry/wind axis to the other side and back. Notably, the concept of a movement in an oscillating or see-saw manner shall not be understood as being restricted to a one-dimensional movement. It is also envisioned that the driving means moves in the oscillating or see-saw manner in two or three dimensions.

It will be understood that the relative geometry between the wind engaging member and the driving means is of importance, since it determines the decomposition of the tether force exerted by the connection means (e.g., load cable) into the lateral and longitudinal component. A preferred geometry is one where the phase difference between the oscillating or see-saw motion of the projection of the kite location onto the Earth, and the oscillating or see-saw motion of the driving means is about 90 degrees. As an example, it could be beneficial to keep the driving means at its maximum deflection on one side of the wind axis until the wind engaging member approximates its maximum deflection on other side of the wind axis.

Such a phase shift can be achieved, e.g., by temporarily restricting the movement of the driving means, for example by appropriately choosing or adopting the inertia of the driving means, and/or by adjusting a braking effect on the driving means, which can be exerted, e.g., by an energy buffer or energy converter. It is therefore particularly beneficial if the inertia of the driving means is adaptable to some extent. The adaptation of the inertia can take place, e.g., by placing, moving or removing weights such as lead blocks on or from the driving means. Alternatively, the relative geometry between the wind engaging member and the driving means can be adaptable, e.g., by adjusting the energy absorption of the energy converter or energy buffer, e.g., by adjusting a gear ratio between the driving means and the energy converter or energy buffer. For this purpose the system can be provided with a controller to ensure a proper relative geometry by controlling the level of energy absorption.

In one aspect the driving means can be a lever which swivels on a pivot. Such a pivoted lever can be of any suitable shape and material. As an example, it can be implemented in the form of a pivoted arm such as a simple iron rod. It can also be implemented in the form of a wheel or ball featuring a rotational axis. In general, the pivot may comprise a ground-fixed part, and a rotating part connected to the lever. Notably, the concept of using a pivoted lever for power transmission is not restricted to one-dimensional lever systems in the form of a hinged joint. It is also envisioned to employ a two-dimensional lever system in the form of a ball joint or two perpendicularly arranged hinged joints. Such a two-dimensional lever system allows for horizontal and vertical lever movement and thus for exploiting both the horizontal and vertical component of the lateral force.

In general, the lever can be configured to swivel back and forth on the pivot driven by the forces exerted from the wind engaging member. As the wind engaging member, during normal operation, flies within the wind window having the shape of a quarter-sphere, it can be sufficient if the lever is able to rotate in a quarter-sphere or around a semi-circle and is constrained in other areas. In such a case the entire system would have to be aligned any time the wind direction changes, which could be accomplished by rotating the entire system until the area of free rotation of the lever corresponds to the quarter-sphere in which the wind engaging member flies. However, the pivoted lever could also be designed such that it can freely rotate around the rotational axis without a dead point. The system would then be able to self-adapt to the current wind direction. During normal operation, the lever would then extend substantially into the wind direction and swivel substantially within the wind window.

As explained, the rotational inertia of the lever (and rotating part of the pivot) can be of importance, as it can contribute to the relative geometry between the wind engaging member and the lever, which in turn determines the decomposition of the tether force into the lateral and longitudinal component. It is therefore beneficial if the rotational inertia of the lever is adaptable to some extent. The adaptation of the rotational inertia can take place, e.g., by placing, moving or removing weights such as lead blocks on or from the lever. Preferably, the rotational inertia is adaptable by torque absorption using an energy buffer or energy converter as further described below. For this purpose the system can be provided with a controller to ensure a proper relative geometry by controlling the level of torque absorption.

The system can comprise a single wind engaging member connected to a single lever. This would help to exclude a collision between wind engaging members flying in close proximity to each other. However, in a specific embodiment the system can also comprise two or more levers, wherein each lever is connected to a wind engaging member, respectively, and wherein the two or more levers swivel on the same pivot. Such a design could be accomplished, e.g., by placing the levers - vertically spaced - along a tower, and could be beneficial if ground space is limited. As a matter of fact, however, during normal operation the one or more levers all extend substantially into the wind direction and swivel substantially within the wind window.

In another aspect the driving means can be a slide, which can be any suitable moving mass that can be guided in guiding means. The skilled person will appreciate that, during normal operation of the system, the guiding means will be aligned such that the predetermined travel path extends substantially perpendicular to the current wind direction. This enables the slide to travel back and forth on the guiding means in response to the trajectory flown by the wind engaging member. In such a configuration, the entire system can be aligned any time the wind direction changes, which could be accomplished by rotating the entire system until the guiding means extend substantially perpendicular to the current wind direction. The guiding means, in turn, can be of a linear shape. They can, however, also be configured such that the predetermined travel path of the slide describes a (semi-)circle, an arc-shape, or a parabola, preferably with the bulge facing towards the wind engaging member.

The wind engaging member can be connected to the driving means by connection means such as a load cable, which can be any means that is capable of reliably and securely connecting the wind engaging member to the driving means. A possible implementation would be a cable or wire rope of sufficient strength. The connection means can be equipped with conductor(s) for data and power transmission, e.g., for on-board sensors such as GPS. In a preferred embodiment the wind engaging member is connect to the lever by more than one connection means. Using more than one connection means is a safeguard against failure, particularly cable break. For that purpose the connection means can be configured such that it consists of two or more separate cables. In certain cases the multiple connection means can also function as the steering means, particularly if the connection means are connected to the outer edges of the wind engaging member. Alternatively, or in addition, the connection means can be supplemented by one or more separate steering lines, data transmission lines, power transmission lines, and/or safety lines.

The wind engaging member according to the invention can be any suitable steerable wind resistance means that is able to fly by gaining support from the air. That is, the wind engaging member can be a fixed-wing aircraft or glider aircraft. Preferably, the wind engaging member is a tethered wing or kite. A tethered wing or a kite has low moving masses and is inexpensive. The tethered wing or kite, in general, can have any suitable shape such as a foil, parafoil or bow kite, or a delta (triangular) kite such as a hang glider or delta plane. Also envisioned are so-called twings, combining elements of surf kites and sailplanes. Preferred are kites featuring a substantial forward movement and good steering properties. Particularly preferred is an aerodynamically efficient wing having a high lift force over drag force (lift-over-drag, L/D) ratio, and low form and friction drag.

The steering means can be any means that is capable of reliably and securely steering the wind engaging member. For example, the steering means can be onboard the wind engaging member, or suspended below it, or mounted on the lever or pivot. A possible implementation of the steering means would be to provide steering lines such as two tethers leading from the lever or pivot or from a control pod to the outer edges of the wind engaging member, respectively. Also envisioned is the use of three, four or more lines. These steering lines can be connected to winches or to a steering rack, so that their relative lengths can be altered to steer the wind engaging member. Another implementation would be to provide one or more rudders on the wind engaging member which can be driven either remotely, e.g., with steering lines, or by means of a control pod suspended underneath the kite. An example of such a control pod can be found in US 2010/0282153.

The steering means can be used to steer the wind engaging member along closed and periodic flight paths. Preferably, the periodic flight path is chosen such that the force on the connection means (e.g., load cable) experiences a component acting into the rotational direction of the lever. In a preferred embodiment, the steering means is configured to steer the wind engaging member along a periodic and closed flight path, most preferably along an oval flight path or along a flight path having the shape of an upright or horizontal figure of eight. Such a flight trajectory allows the wind engaging member to repeatedly criss-cross the quarter-sphere it flies in without any noteworthy deceleration of its forward movement. As a result, the wind engaging member efficiently exerts a lateral force on the connection means (e.g., load cable), which can be used to move the driving means in the oscillating or see-saw manner. For example, the lateral force on the connection means (e.g., load cable) can be used to swivel a lever back and forth around a pivot or to move a slide back and forth along a predetermined travel path.

Preferably, the movement of the driving means is controlled as a function of the relative position between the driving means and the wind engaging member. The flight trajectory may also be defined with respect to a reference point such as the pivot, instead of with respect to (the tip of) the driving means. In this case the relative position between the wind-engaging member and the reference point would be of importance in determining the energy absorption level.

Preferably, the system further comprises an energy buffer, said energy buffer being fed by the motion of the driving means. The energy buffer can be a flywheel which is driven by the motion of the driving means. As a result, part of the energy of the motion of the driving means can be converted into rotational energy of the flywheel. The flywheel, in turn, can be connected to an energy converter in such a way that part of the rotational energy of the flywheel is converted to electrical energy. In case the driving means is a pivoted lever, the flywheel can be used to absorb rotational energy of the lever and/or apply a braking force to the lever, which can be achieved, e.g., by adapting the transmission ratio between the lever and the flywheel.

Preferably, the system further comprises an energy converter configured to convert part of the rotational energy of the lever relative to the pivot or of the kinetic energy of the slide on the guiding means into electrical energy, thermodynamic energy, or other forms of mechanical energy. Possible forms of an energy converter are an electric generator, a hydrogen reactor or a water pump.

That is, in a particularly preferred embodiment, part of the energy of the motion of the driving means is converted into electrical energy by means of an electric generator. In case the driving means is a lever, the pivot could be coupled to the generator with a two-prong connection, employing a first freewheel with a first rotational direction, and a second freewheel with an opposite rotational direction and an additional gear. In this way, the generator can rotate constantly in one direction, while absorbing torque from the pivot independently of the rotational direction of the pivot.

In case the driving means is a slide, the generator can be driven by the relative movement between the slide and the guiding means, e.g., by providing a rack-and-pinion coupling between the slide and the guiding means. In such a case it would also be feasible to accommodate the electric generator within the slide.

As mentioned above, the energy converter may also serve to absorb torque in such a way as to influence the relative geometry between the wind engaging member and the driving means.

Further, it might be useful to provide the system with an energy storage for storing the energy produced by the energy converter. This energy storage can be, e.g., some kind of rechargeable battery, or a chemical storage like a hydrogen reactor or an elevated water reservoir. Providing an energy storage allows for a "use later" scenario where the energy produced by the system is consumed at a later point in time. This is particularly useful since in most cases the power consumption peak does not coincide with peaks in wind flow.

In a specific embodiment, the system can further comprise pneumatic and hydraulic accumulators, which can function as the energy buffer or the energy storage. A compressor can be connected to a reservoir, said compressor being driven by the driving means or the energy converter. The energy, in this case, can be stored as pressure in the reservoir.

In a preferred embodiment the system is provided with accommodating means, preferably disposed at or near the driving means. The accommodating means can be configured to accommodate a section of the connection means (e.g., load cable) and can be configured, e.g., as a cable reel. Such a configuration allows for adapting the flying altitude of the wind engaging member and thus to access fields with specific wind conditions. For example, if the wind in a specific height is stronger than in other heights and the aim is to maximize the output of the system, the wind engaging member can be directed to that height. In another scenario, if the output of the system shall be reduced or the system shall be switched off, the connection means (e.g., load cable) can be partly or fully reeled in on the accommodating means.

Possible applications of the invention include the generation of electrical energy. It is also envisioned that part of the energy of the motion of the driving means can be used to drive a pump, particularly a water pump. Such a configuration can be useful for irrigation purposes and/or to fill an (elevated) water reservoir. The invention could also be useful for desalination by influencing pressure or fill height of osmosis tanks, i.e., through reverse osmosis. Another area of application might be water purification (in remote areas, e.g.). Another possible application is to build a power plant comprising a plurality of the above described systems.

### Description of the Drawings

Non-limiting examples of the invention are now described with reference to the accompanied drawings, in which
Figure 1 shows a top view of an exemplary embodiment of the invention that illustrates the general principle of using a pivoted lever as the driving means;
Figure 2 shows a top view of another exemplary embodiment of the invention that illustrates the general principle of using a slide as the driving means.

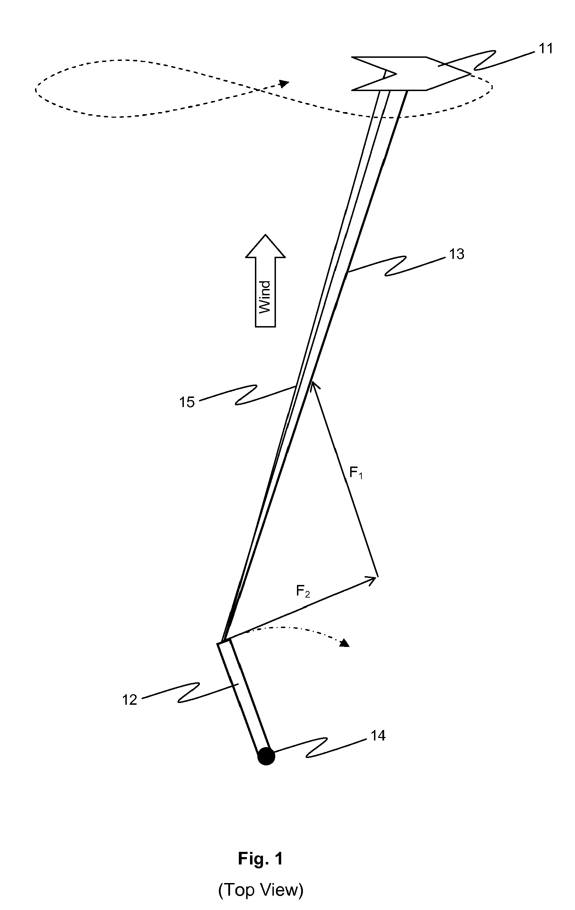

With reference to Figure 1 an exemplary embodiment of the invention is shown in top view that illustrates the general principle according to one aspect of the invention. According to this aspect, a pivoted lever (12) is used for power transmission. A wind engaging member (11), such as a tethered wing or kite, is connected to the lever (12) by a load cable (13). The lever (12), in turn, swivels around a pivot (14).

During normal operation of the system, the pulling forces exerted by the wind engaging member (11) are transmitted through the load cable (13) to the fixation point on the lever (12). Depending on the relative position of the lever (12), these pulling forces are divided into two components: A first component (F₁) acting into the direction the lever (12) extends, and a second component (F₂) acting into the rotational direction of the lever (12), thereby effecting a torque. Hence, the second force component (F₂) results in a movement of the lever (12) around its pivot. This movement can be exploited, e.g., for driving an electric generator or a pump (not shown). Alternatively or in addition, the pivotal movement of the lever (12) can be used to impel a flywheel (not shown), which in turn can drive an electric generator, a pump or the like.

Also shown in Figure 1 are steering means (15). The steering means (15) can be used to steer the wind engaging member (11) along a closed and periodic flight path. In Figure 1 the periodic flight path is chosen such that it resembles a horizontal figure of eight. As a result, the force on the load cable (13) experiences a component acting into the rotational direction of the lever (12), which is substantially perpendicular to the wind direction - depending on the deflection of the lever arm (12). This force produces a periodic back-and-forth motion of the lever (12) around the pivot (14), constrained to a circular or spherical section, i.e., the wind window.

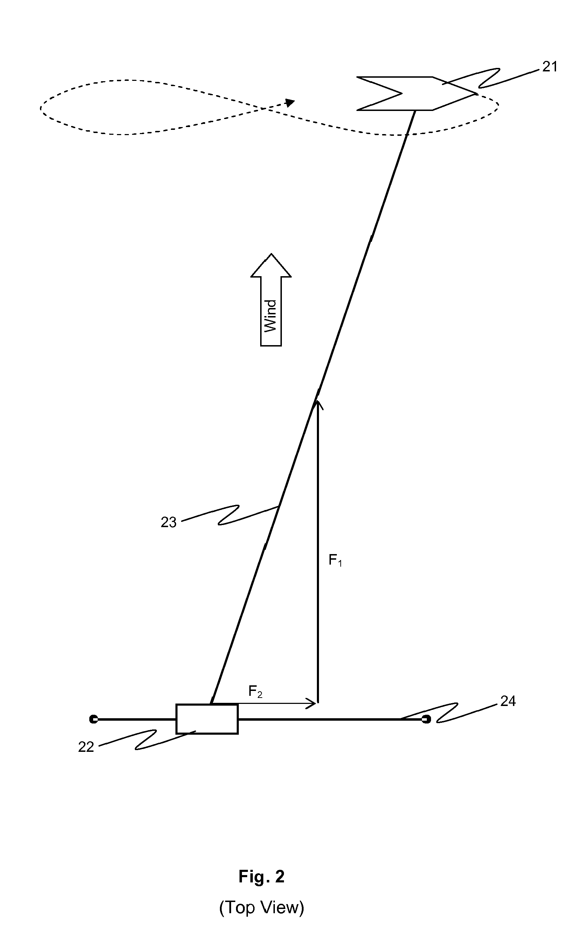

With reference to Figure 2 another exemplary embodiment of the invention is shown that illustrates the general principle according to another aspect of the invention. According to this aspect, a slide (22) is used for power transmission. The slide (22) is movably mounted on guiding means (24), so that the slide (22) can travel along a predetermined travel path. The pulling forces exerted by the wind engaging member (21) are transmitted through the load cable (23) to the fixation point on the slide (22). Depending on the relative position of the slide (22) on the guiding means (24), the pulling forces exerted by the wind engaging member (21) are divided into two components: A first component (F₁) acting into a direction perpendicular to the predetermined travel path, and a second component (F₂) acting into the direction of the predetermined travel path. Hence, the second force (F₂) component results in a movement of the slide (22) on the guiding means (24). This movement can be exploited, e.g., for driving an electric generator or a pump (not shown). Alternatively or in addition, the lateral movement of the slide (22) can be used to impel a flywheel (no shown), which in turn can drive an electric generator, a pump or the like.

It is understood that the principles of Figures 1 and 2 can be combined in one system, e.g., by providing a slide located on the tip of a lever, the slide being guided in guiding means back and forth along a predetermined travel path.

Although the foregoing embodiments have been described in some detail for purposes of clarity of understanding, the invention is not limited to the details provided. There are many alternative ways of implementing the invention and the disclosed embodiments are not to be considered as restrictive. Further, it will be appreciated that the described features of the invention can be combined in various ways. It is particularly envisioned that the invention can be implemented by various combinations of two or more of the disclosed features.

## Claims

1. A system for converting wind flow energy into mechanical, thermodynamic and/or electrical energy, comprising
driving means (12, 22) for driving an energy buffer and/or an energy converter;
a wind engaging member (11, 21) connected to the driving means (12, 22); and steering means (15) for steering the wind engaging member (11, 21) in such a way that it moves the driving means (12, 22) in a see-saw manner.

2. The system according to claim 1, further comprising an energy buffer configured to buffer energy resulting from the motion of the driving means.

3. The system according to claim 2, wherein the energy buffer is a flywheel, said flywheel being driven by the motion of the driving means.

4. The system according to any of the preceding claims, further comprising an energy converter configured to convert part of the mechanical energy of the driving means and/or part of the energy buffered in the energy buffer into electrical energy, thermodynamic energy, or other forms of mechanical energy.

5. The system according to claim 4, further comprising an energy storage for storing the energy produced by the energy converter.

6. The system according to any of the preceding claims, wherein the wind engaging member (11, 21) is connected to the driving means (12, 22) by connection means, preferably a load cable (13, 23).

7. The system according to claim 6, further comprising accommodating means disposed at the driving means, said accommodating means being configured to accommodate at least a section of the connection means.

8. The system according to any of the preceding claims, wherein the steering means is configured to steer the wind engaging member along a periodic and closed flight path, particularly along an oval flight path or along a flight path having the shape of an upright or horizontal figure of eight.

9. The system according to any of the preceding claims, wherein the driving means is a lever (12) which swivels back and forth on a pivot (14).

10. The system according to any of the preceding claims, wherein the driving means is a slide (22) which travels back and forth along a predetermined travel path on guiding means (24).

11. A method for converting wind flow energy into mechanical, thermodynamic and/or electrical energy, the method comprising repeatedly steering a wind engaging member (11, 21) in a direction substantially perpendicular to a wind direction, thereby effecting a driving means (12, 22), connected to the wind engaging member (11, 21), to move in a see-saw manner.

12. The method according to claim 11, wherein the wind engaging member is steered along a periodic and closed flight path, particularly along an oval flight path or along a flight path having the shape of an upright or horizontal figure of eight.

13. The method according to claim 11 or 12, wherein the movement of the driving means is controlled by an energy buffer or an energy converter as a function of the relative position between the driving means and the wind engaging member or between a reference point and the wind engaging member.

14. Use of the system according to any of claims 1-10 or the method according to any of claims 11-13 for producing electrical energy, and/or for pumping water, and/or for effecting water desalination through reverse osmosis.

15. A power plant comprising a plurality of systems according to any of claims 1-10.
